# EUROPEAN PATENT APPLICATION

(11) **EP 4 013 111 A1**
(43) Date of publication of application: **15.06.2022**
(21) Application number: 19942387.2
(22) Date of filing: 22.08.2019
(51) Int. Cl.: H04W 28/06

(54) **METHOD FOR PROCESSING INFORMATION, AND TERMINAL DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN)
(74) Representative: Taor, Simon Edward William
(86) International application number: PCT/CN2019/102089
(87) International publication number: WO 2021/031214

(57) **Abstract**

A method for processing information, a terminal device, a chip, a computer-readable storage medium, a computer program product and a computer program are provided. The method includes: transmitting (21), by the terminal device, a msg3 without carrying a first type of content, during a process of performing a first type of handover by the terminal device. The first type of content includes data transmitted on a first type of channel.

## Description

### TECHNICAL FIELD

The present disclosure relates to the field of information processing technologies, and more particularly, to a method for processing information, a terminal device, a chip, a computer-readable storage medium, a computer program product, and a computer program.

### BACKGROUND

In the related art, when a terminal device receives a handover command, it releases a connection with a source cell, and establishes a connection with a target cell through a random access. In handover processing for a terminal device connecting with both a source network device and a target network device, the terminal device, when receiving the handover command, will retain relevant configurations of the source network device until the connection with the source network device is released. Currently, an msg3 transmitted during a handover process may carry data, which may make it impossible to reduce additional operations due to reordering and data forwarding on a network side.

### SUMMARY

To overcome the above technical problem, embodiments of the present disclosure provide a method for processing information, a terminal device, a chip, a computer-readable storage medium, a computer program product, and a computer program.

In a first aspect, a method for processing information is provided. The method can be applied in a terminal device. The method includes: transmitting, by the terminal device, a msg3 without carrying a first type of content, during a process of performing a first type of handover by the terminal device. The first type of content includes data transmitted on a first type of channel.

In a second aspect, a terminal device is provided. The terminal device includes a communication unit configured to transmit a msg3 without carrying a first type of content, during a process of performing a first type of handover. The first type of content includes data transmitted on a first type of channel.

In a third aspect, a terminal device is provided. The terminal device includes a processor and a memory. The memory has a computer program stored thereon. The processor is configured to invoke and run the computer program stored in the memory to perform the method in the first aspect or any implementation thereof.

In a fourth aspect, a chip is provided. The chip is configured to implement the method in any of the above implementations.

Specifically, the chip includes a processor. The processor is configured to invoke and run a computer program from a memory, thereby causing an apparatus provided with the chip to perform the method in the first aspect or any implementation thereof.

In a fifth aspect, a computer-readable storage medium is provided. The computer-readable storage medium stores a computer program. The computer program causes a computer to perform the method in the first aspect or any implementation thereof.

In a sixth aspect, a computer program product is provided. The computer program product includes computer program instructions. The computer program instructions cause a computer to perform the method in the first aspect or any implementation thereof.

In a seventh aspect, a computer program is provided. The computer program, when executed on a computer, causes a computer to perform the method in the first aspect or any implementation thereof.

By adopting the above solutions, the terminal device can be controlled to carry no first type of content in the msg3 when the terminal device performs the first type of handover. In this way, it is possible to reduce uplink data transmitted by the terminal device to the source network device and/or the target network device via the msg3, thereby reducing additional operations due to reordering and data forwarding on a network side.

### BRIEF DESCRIPTION OF DRAWINGS

FIG. 1 is a first schematic diagram showing a communication system architecture according to an embodiment of the present disclosure.
FIG. 2 is a flowchart illustrating a method for processing information according to an embodiment of the present disclosure.
FIG. 3 is a flowchart illustrating a handover process.
FIG. 4 is a schematic diagram showing a structure of a terminal device according to an embodiment of the present disclosure.
FIG. 5 is a schematic diagram showing a structure of a communication device according to an embodiment of the present disclosure.
FIG. 6 is a schematic block diagram showing a chip according to an embodiment of the present disclosure.
FIG. 7 is a second schematic diagram showing a communication system architecture according to an embodiment of the present disclosure.

### DESCRIPTION OF EMBODIMENTS

In order to facilitate detailed understanding of features and technical content of the embodiments of the present disclosure, implementations of the embodiments of the present disclosure will be described in detail below with reference to the accompanying drawings. The accompanying drawings are for reference and description only, rather than limiting the embodiments of the present disclosure.

Technical solutions according to embodiments of the present disclosure will be described below in combination with accompanying drawings of the embodiments of the present disclosure. Obviously, the embodiments described below are only a part of the embodiments of the present disclosure, rather than all of the embodiments. On a basis of the embodiments in the present disclosure, all other embodiments obtained by a person skilled in the art without creative labor shall fall within the protection scope of the present disclosure.

The technical solutions according to the embodiments of the present disclosure can be applied to various communication systems, such as a Global System of Mobile (GSM) communication system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, a 5-th Generation (5G) system, etc.

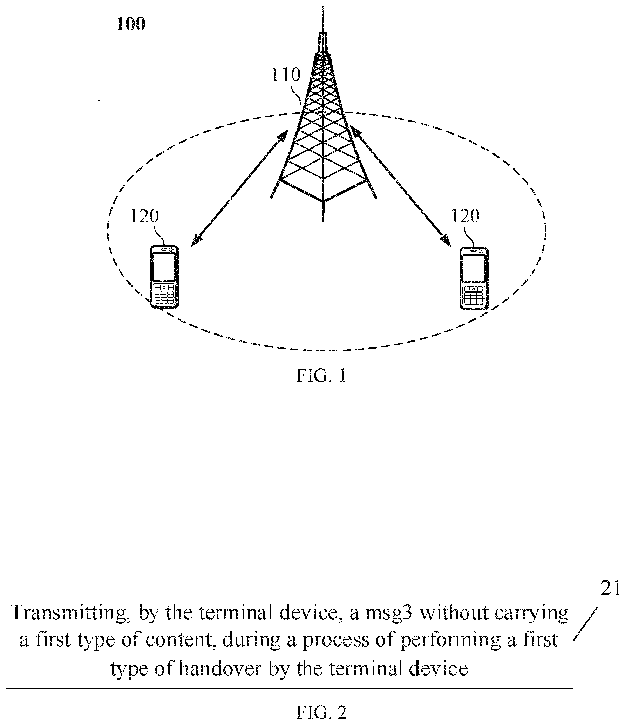

Exemplarily, a communication system 100 where an embodiment of the present disclosure is applied can be as illustrated in FIG. 1. The communication system 100 may include a network device 110. The network device 110 may be a device that communicates with a User Equipment (UE) 120 (or called a communication terminal or a terminal). The network device 110 may provide communication coverage for a specific geographic region, and may communicate with a UE located in the coverage region. In at least one embodiment, the network device 110 may be a base station such as Base Transceiver Station (BTS) in a GSM system or a CDMA system, a base station such as NodeB (NB) in a WCDMA system, a base station such as Evolutional Node B (eNB or eNodeB) in an LTE system, or a wireless controller in a Cloud Radio Access Network (CRAN). Alternatively, the network device can be a mobile switching center, a relay station, an access point, a vehicle-mounted device, a wearable device, a hub, a switch, a bridge, a router, a network side device in a 5G network, or a network device in a future evolved Public Land Mobile Network (PLMN), etc.

The communication system 100 further includes at least one UE 120 located within the coverage region of the network device 110. The "UE" used herein includes, but is not limited to, a device configured to receive/transmit a communication signal via a wired line connection, such as a Public Switched Telephone Network (PSTN), a Digital Subscriber Line (DSL), a digital cable, a direct cable connection, and/or via another data connection/network, and/or via a wireless interface, for example, for a cellular network, a Wireless Local Area Network (WLAN), a digital television network such as a Digital Video Broadcasting Handheld (DVB-H) network, a satellite network, and an Amplitude Modulation-Frequency Modulation (AM-FM) broadcast transmitter, and/or via another UE; and/or an Internet of Things (IoT) device. An UE configured to communicate through the wireless interface may be referred to as a "wireless communication terminal", a "wireless terminal", or a "mobile terminal".

In at least one embodiment, direct communication, such as Device to Device (D2D) communication, may be performed between the UEs 120.

It should be understood that terms "system" and "network" in the present disclosure are often used interchangeably herein. The term "and/or" in the present disclosure only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In order to facilitate detailed understanding of features and technical content of the embodiments of the present disclosure, implementations of the embodiments of the present disclosure will be described in detail below with reference to the accompanying drawings. The accompanying drawings are for reference and description only, rather than limiting the embodiments of the present disclosure.

An embodiment of the present disclosure provides a method for processing information. The method can be applied in a terminal device. As illustrated in FIG. 2, the method can include the following operations.

In block 21, the terminal device transmits a msg3 without carrying a first type of content, during a process of performing a first type of handover by the terminal device.

The first type of content includes data transmitted on a first type of channel.

The first type of handover is a handover during which connections with a target network device and a source network device are maintained. Specifically, the first type of handover may be an enhanced Make-Before-Break (eMBB) handover, or a dual active protocol stack handover. There may be other names for the first type of handover. Any handover process during which connections with the target network device and the source network device can be maintained is within the protection scope of the embodiment.

In an embodiment, a network device may be a base station on a network side. The source network device may be a source base station with which the terminal device connects, and the target network device may be a target base station. The terminal device may be a device capable of maintaining connections with both the source network device and the target network device during handover.

In addition, transmission of the msg3 by the terminal device may occur in a content transmitted during a process of the terminal device initiating a random access to the target network device.

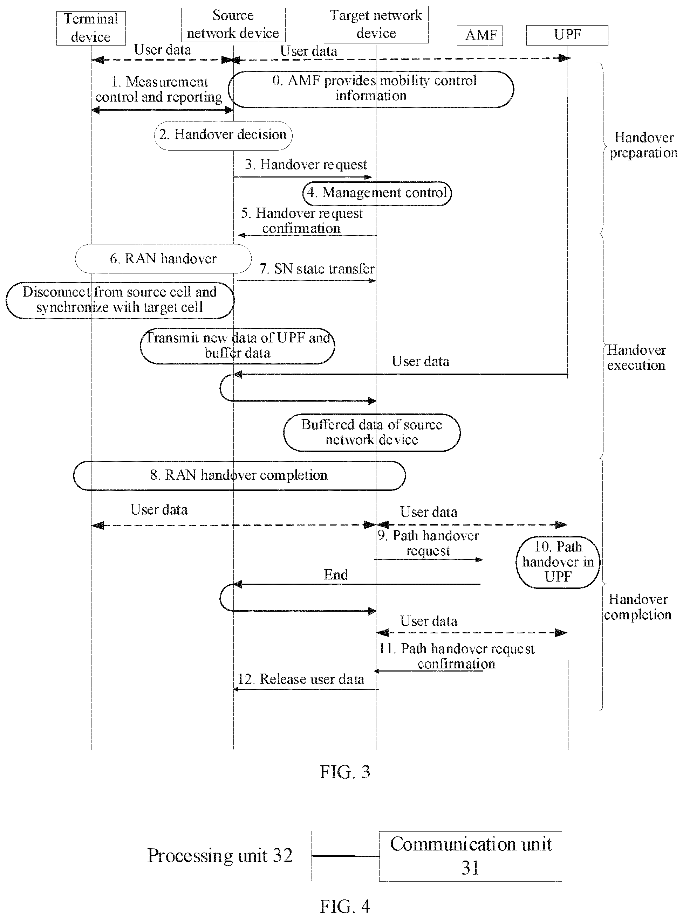

A scenario of this embodiment will be described first. Similar to the LTE system, a New Radio (NR) system supports a handover process of the terminal device in a connected state. When the terminal device that is using network services moves from one cell to another, or due to a load adjustment of wireless transmission services, activation operation maintenance, a device failure, etc., the system needs to transfer a communication link between the terminal device and an original cell to a new cell in order to ensure the continuity of communication and the quality of service. That is, the system needs to perform a handover process. Taking a handover process based on an Xn interface as an example for description, the entire handover process is divided into the following three stages. Referring to FIG. 3, the entire handover process includes a handover preparation stage, a handover execution stage, and a handover completion stage.

At the handover preparation stage as illustrated in operations 0-5 in the figure, the target network device and the source network device perform processing based on mobility control information provided by an Access and Mobility Management Function (AMF). The terminal device performs measurement control and reporting, and the source network device makes a handover decision. Then, the source network device makes a handover request to the target network device, which performs management control and handover request confirmation. A handover confirmation message contains a handover command generated by a target cell. The source network device is not allowed to make any modification to the handover command generated by the target network device, but directly forwards the handover command to the terminal device.

At the handover execution stage as illustrated in operations 6-7 in the figure, the terminal device immediately performs the handover process upon receiving the handover command. The handover process may include: the terminal device and the source network device performing a Radio Access Network (RAN) handover, during which the terminal device disconnects from a source cell, synchronizes with the target cell, and establishes a connection with the target cell (such as performing a random access, transmitting a Radio Resource Control (RRC) handover completion message to the target base station, etc.); and a Secondary Node (SN) state transfer. The handover process may further include: the source network device transmitting new data of a User Plane Function (UPF) entity, and transferring buffered data to the target network device.

At the handover completion stage as illustrated in operations 8-12 in the figure, after the RAN handover is completed, user data is transmitted between the terminal device and the target network device, and the user data is transmitted between the target network device and the UPF. Then, the target network device transmits a path handover request to the AMF. The UPF performs the path handover. Next, the AMF informs the target network device of a completion of the path handover through the source network device, and transmits path handover request confirmation to the target network device. Subsequently, the target network device notifies the source network device to release the user data.

In addition, another handover scenario corresponding to this embodiment may also include the following two architectures.

One architecture is a handover based on dual connectivity. In such a case, when the handover is performed, the target network device is first added as an SN, the SN is then changed into a Master Node (MN) through role switching signaling, and finally the source network device is released, thereby achieving an effect of shortening interruption time during the handover.

Another architecture is a handover during which the connections with both the source network device and the target network device are maintained, which can be construed as the eMBB handover. This handover differs in that when receiving a handover command (HO command), the terminal device continues maintaining a connection with the source network device and at the same time initiates a random access to the target network device. The connection with the source network device won't be released until the terminal device has accessed the target network device.

Further, the following restrictions are added. Restriction 1: for a 0ms handover, there is no need to support simultaneous UpLink (UL) Physical Uplink Shared Channel (PUSCH) transmission. Restriction 2: after receiving the first UL grant transmitted by the target network device (i.e., the target base station), the UL PUSCH is handed over from the source network device to the target network device.

On a basis of the above architectures, the solution provided in this embodiment may be implemented in the following modes.

In Mode 1, a priority configuration of logical channels is adjusted, such that the terminal device can determine the content carried in a transmission based on a new priority configuration of logical channels.

Specifically, a second type of content carried by the terminal device in the msg3 transmitted during the process of performing the first type of handover can be determined based on a first priority configuration of logical channels.

The first priority configuration of logical channels can be different from a third priority configuration of logical channels. Compared with the third priority configuration of logical channels, the first priority configuration of logical channels is added with a content: in the first type of handover, the msg3 transmits data on a logical channel except data on an UpLink (UL)-Common Control Channel (CCCH), an UL-Dedicated Control Channel (DCCH), and an UL-Dedicated Traffic Channel (DTCH).

The first priority configuration of logical channels includes at least one content capable of being carried by the terminal device during the first type of handover. A sequence of the at least one content in the first priority configuration of logical channels is used as a priority sequence for packaging the at least one content during transmission.

The at least one content in the first priority configuration of logical channels and the sequence of the at least one content in the first priority configuration of logical channels can include: a Media Access Control (MAC) Control Element (CE) carrying a Cell-Radio Network Temporary Identifier (C-RNTI), or data on an UL-CCCH; a MAC CE carrying a Data volume and Power headroom Report (DPR); a MAC CE carrying Semi-Persistent Scheduling (SPS) confirmation; a MAC CE carrying a Buffer Status Report (BSR), except a BSR containing padding data; a MAC CE carrying a Power Headroom Report (PHR), an extended PHR, or a dual connectivity PHR; a MAC CE carrying a sidelink BSR, except a sidelink BSR containing padding data; data on a logical channel, except data on the UL-CCCH, an UL-DCCH and an UL-DTCH, transmitted by the msg3 during the first type of handover; a MAC CE carrying a request for a recommended bit rate; a MAC CE carrying a BSR containing padding data; and a MAC CE carrying a sidelink BSR containing padding data.

That is, the second type of content carried in the msg3 can be determined based on the content included in the first priority configuration of logical channels. For example, when the DPR, the SPS, the data on the UL-DCCH, and the data on the logical channel except the UL-CCCH, the UL-DCCH, and the UL-DTCH need to be transmitted currently, it can be determined based on the first priority configuration of logical channels that the data on the UL-DCCH is not transmitted in the second type of content. The second type of content can only include the MAC CE carrying the DPR, the MAC CE carrying the SPS, and the data on the logical channel except the UL-CCCH, the UL-DCCH, and the UL-DTCH. Then, these contents are packaged and subject to subsequent transmission processing based on a priority sequence (or a sequence) of the contents in the first priority configuration of logical channels.

In Mode 2, priorities of logical channels are not modified. Instead, the first type of content not carried in the msg3 can be determined based on a predetermined rule.

The predetermined rule can include that the msg3 transmitted during the process of performing the first type of handover does not carry at least one of data transmitted on the DTCH and data transmitted on the DCCH.

The predetermined rule may be a rule specified in a protocol.

That is, in this mode, processing can be performed based on the third priority configuration of logical channels. However, during the process of performing the first type of handover, data that the terminal device will not carry in the msg3 can be controlled according to provisions of the protocol.

Here, there may also be another implementation mode. The second type of content carried in the msg3 may be determined based on a newly set second priority configuration of logical channels. In this case, the predetermined rule is used in combination with the second priority configuration of logical channels. After the first type of content that cannot be carried in the msg3 is determined based on the predetermined rule, the second type of content that can be carried in the msg3 can be determined through the second priority configuration of logical channels.

The second priority configuration of logical channels can include the following two types.

In Type 1, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; data on the DCCH; and padding data.

That is, when the data on the DTCH, the BSR and the PHR need to be transmitted currently, it can be determined based on the second priority configuration of logical channels not to transmit the data on the DTCH. The BSR and the PHR are transmitted in accordance with the sequence of the BSR and the PHR in the second priority configuration of logical channels.

It should be pointed out that in this case, when there is a conflict between the predetermined rule and the second priority configuration of logical channels, e.g., the predetermined rule does not allow the msg3 to carry the data transmitted on the DCCH, and the second priority configuration of logical channels includes the DCCH and a priority corresponding to the DCCH, the predetermined rule shall prevail. That is, for example, when the data on the DCCH, the BSR, and the PHR need to be transmitted currently, it can be determined based on the predetermined rule not to transmit the DCCH. Then, the sequence of transmitting the BSR and the PHR can be determined based on the second priority configuration of logical channels for transmission of the BSR and the PHR.

In Type 2, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; and padding data.

That is, when the data on the DTCH, the data on the DCCH, the BSR, and the PHR need to be transmitted currently, it is determined based on the predetermined rule to transmit neither the data on the DTCH nor the data on the DCCH. Then, the sequence of the BSR and the PHR can be determined based on the second priority configuration of logical channels for transmission of the BSR and the PHR

In Mode 3, the third priority configuration of logical channels is not modified. Instead, the second priority configuration of logical channels is added to control the content carried in the msg3 during the first type of handover.

Specifically, during the process of performing the first type of handover by the terminal device, the second type of content carried by the terminal device in the msg3 is determined by using the second priority configuration of logical channels.

The second priority configuration of logical channels is different from the third priority configuration of logical channels. The third priority configuration of logical channels is used during a process of performing a non-first type handover.

That is, the second priority configuration of logical channels can be used in the first type of handover, and the third priority configuration of logical channels can be used in processing other than the first type of handover. For example, the third priority configuration of logical channels can be used in ordinary handovers other than the first type of handover. From the description of the first mode, it can be seen that compared with the first priority configuration of logical channels, the third priority configuration of logical channels omits that "in the first type of handover, the msg3 transmits data on logical channels except data on an UL-CCCH, an UL-DCCH, and an UL-DTCH". The other contents and their sequence are the same as those described in the first priority configuration of logical channels, and details thereof will be omitted here.

The second priority configuration of logical channels can include the following two types.

In Type 1, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; data on the DCCH; and padding data.

That is, when the data on the DTCH, the BSR and the PHR need to be transmitted currently, it can be determined based on the second priority configuration of logical channels not to transmit the data on the DTCH. The BSR and the PHR are transmitted in accordance with the sequence of the BSR and the PHR in the second priority configuration of logical channels.

It should be pointed out that in this case, the second type of content that can be carried in the msg3 can contain the data on the DCCH. Considering the restrictions on the first type of content, it can be seen that in this case, the first type of content that cannot be carried in the msg3 can only include the data transmitted on the DTCH.

In Type 2, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; and padding data.

That is, when the data on the DTCH, the data on the DCCH, the BSR, and the PHR need to be transmitted currently, it can be determined based on the second priority configuration of logical channels in this case to transmit neither the data on the DTCH nor the data on the DCCH. The BSR and the PHR can be transmitted in accordance with the sequence of the BSR and the PHR in the second priority configuration of logical channels described above.

It should also be understood that the first type of content is defined in the above as including at least one of the data on the DCCH and the data on the DTCH, but in practice, other data that is not allowed to be carried by the msg3 can be added as needed, though examples of such data are not exhaustively listed in this embodiment.

It can be seen that, by adopting the above solution, the terminal device can be controlled to carry no first type of content in the msg3 when the terminal device performs the first type of handover. In this way, it is possible to reduce uplink data transmitted by the terminal device to the source network device and/or the target network device, thereby reducing additional operations due to reordering and data forwarding on the network side.

An embodiment of the present disclosure provides a terminal device. As illustrated in FIG. 4, the terminal device can include a communication unit 31.

The communication unit 31 can be configured to transmit a msg3 without carrying a first type of content, during a process of performing a first type of handover.

The first type of content includes data transmitted on a first type of channel.

The first type of handover is a handover during which connections with a target network device and a source network device are maintained. Specifically, the first type of handover may be an enhanced Make-Before-Break (eMBB) handover, or may be understood as a dual active protocol stack handover. There may be other names for the first type of handover. Any handover process during which connections with the target network device and the source network device can be maintained is within the protection scope of the embodiment.

In an embodiment, a network device may be a base station on a network side. The source network device may be a source base station with which the terminal device connects, and the target network device may be a target base station. The terminal device may be a device capable of maintaining connections with both the source network device and the target network device during handover.

In addition, transmission of the msg3 by the terminal device may occur in a content transmitted during a process of the terminal device initiating a random access to the target network device.

The solution provided in this embodiment may be implemented in the following modes.

In Mode 1, a priority configuration of logical channels is adjusted, such that the terminal device can determine the content carried in a transmission based on a new priority configuration of logical channels.

Specifically, the terminal device can further include a processing unit 32. The processing unit 32 can be configured to determine, based on a first priority configuration of logical channels, a second type of content carried in the msg3 transmitted during the process of performing the first type of handover.

The first priority configuration of logical channels can be different from a third priority configuration of logical channels. Compared with the third priority configuration of logical channels, the first priority configuration of logical channels is added with a content: in the first type of handover, the msg3 transmits data on a logical channel except data on an UL-CCCH, an UL-DCCH, and an UL-DTCH.

The first priority configuration of logical channels includes at least one content capable of being carried by the terminal device during the first type of handover. A sequence of the at least one content in the first priority configuration of logical channels is used as a priority sequence for packaging the at least one content during transmission.

The at least one content in the first priority configuration of logical channels and the sequence of the at least one content in the first priority configuration of logical channels can include: a MAC CE carrying a C-RNTI, or data on an UL-CCCH; a MAC CE carrying a DPR; a MAC CE carrying SPS confirmation; a MAC CE carrying a BSR, except a BSR containing padding data; a MAC CE carrying a PHR, an extended PHR, or a dual connectivity PHR; a MAC CE carrying a sidelink BSR, except a sidelink BSR containing padding data; data on a logical channel, except data on the UL-CCCH, an UL-DCCH and an UL-DTCH, transmitted by the msg3 during the first type of handover; a MAC CE carrying a request for a recommended bit rate; a MAC CE carrying a BSR containing padding data; and a MAC CE carrying a sidelink BSR containing padding data.

That is, the second type of content carried in the msg3 can be determined based on the content included in the first priority configuration of logical channels. For example, when the DPR, the SPS, the data on the UL-DCCH, and the data on the logical channel except the UL-CCCH, the UL-DCCH, and the UL-DTCH need to be transmitted currently, it can be determined based on the first priority configuration of logical channels that the data on the UL-DCCH is not transmitted in the second type of content. The second type of content can only include the MAC CE carrying the DPR, the MAC CE carrying the SPS, and the data on the logical channel except the UL-CCCH, the UL-DCCH, and the UL-DTCH. Then, these contents are subject to subsequent transmission processing based on a priority sequence (or a sequence) of the contents in the first priority configuration of logical channels.

In Mode 2, priorities of logical channels are not modified. Instead, the processing unit 32 may be configured to determine the first type of content not carried in the msg3 based on a predetermined rule.

The predetermined rule can include that the msg3 transmitted during the process of performing the first type of handover does not carry at least one of data transmitted on the DTCH and data transmitted on the DCCH.

The predetermined rule may be a rule specified in a protocol.

That is, in this mode, during the process of performing the first type of handover, data that the terminal device will not carry in the msg3 can be controlled according to provisions of the protocol.

Here, there may also be another implementation mode. The processing unit 32 may be configured to determine the second type of content carried in the msg3 based on a newly set second priority configuration of logical channels. In this case, the processing unit 32 can be configured to use the predetermined rule in combination with the second priority configuration of logical channels. After the first type of content that cannot be carried in the msg3 is determined based on the predetermined rule, the second type of content that can be carried in the msg3 can be determined through the second priority configuration of logical channels.

The second priority configuration of logical channels can include the following two types.

In Type 1, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; data on the DCCH; and padding data.

That is, when the data on the DTCH, the BSR and the PHR need to be transmitted currently, it can be determined based on the second priority configuration of logical channels not to transmit the data on the DTCH. The BSR and the PHR are transmitted in accordance with the sequence of the BSR and the PHR in the second priority configuration of logical channels.

It should be pointed out that in this case, when there is a conflict between the predetermined rule and the second priority configuration of logical channels, e.g., the predetermined rule does not allow the msg3 to carry the data transmitted on the DCCH, and the second priority configuration of logical channels includes the DCCH and a priority corresponding to the DCCH, the predetermined rule shall prevail. That is, for example, when the data on the DCCH, the BSR, and the PHR need to be transmitted currently, it can be determined based on the predetermined rule not to transmit the DCCH. Then, the sequence of transmitting the BSR and the PHR can be determined based on the second priority configuration of logical channels for transmission of the BSR and the PHR.

In Type 2, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; and padding data.

That is, when the data on the DTCH, the data on the DCCH, the BSR, and the PHR need to be transmitted currently, it is determined based on the predetermined rule to transmit neither the data on the DTCH nor the data on the DCCH. Then, the sequence of the BSR and the PHR can be determined based on the second priority configuration of logical channels for transmission of the BSR and the PHR.

In Mode 3, the third priority configuration of logical channels is not modified. Instead, the second priority configuration of logical channels is added to control the content carried in the msg3 during the first type of handover.

Specifically, the processing unit 32 can be configured to, during the process of performing the first type of handover, determine the second type of content carried by the terminal device in the msg3 by using the second priority configuration of logical channels, without using the third priority configuration of logical channels.

The second priority configuration of logical channels is different from the third priority configuration of logical channels. The third priority configuration of logical channels is used during a process of performing a non-first type handover.

That is, the second priority configuration of logical channels can be used in the first type of handover, and the third priority configuration of logical channels can be used in processing other than the first type of handover. For example, the third priority configuration of logical channels can be used in ordinary handovers other than the first type of handover. From the description of the first mode, it can be seen that compared with the first priority configuration of logical channels, the third priority configuration of logical channels omits that "in the first type of handover, the msg3 transmits data on logical channels except data on an UL-CCCH, an UL-DCCH, and an UL-DTCH". The other contents and their sequence are the same as those described in the first priority configuration of logical channels, and details thereof will be omitted here.

The second priority configuration of logical channels can include the following two types.

In Type 1, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; data on the DCCH; and padding data.

That is, when the data on the DTCH, the BSR and the PHR need to be transmitted currently, it can be determined based on the second priority configuration of logical channels not to transmit the data on the DTCH. The BSR and the PHR are transmitted in accordance with the sequence of the BSR and the PHR in the second priority configuration of logical channels.

It should be pointed out that in this case, the second type of content that can be carried in the msg3 can contain the data on the DCCH. Considering the restrictions on the first type of content, it can be seen that in this case, the first type of content that cannot be carried in the msg3 can include the data transmitted on the DTCH.

In Type 2, the second priority configuration of logical channels includes at least one content capable of being carried by the terminal device during the first type of handover. A sequence of the at least one content in the second priority configuration of logical channels is used as a priority sequence for packaging the at least one content during transmission.

The at least one content in the second priority configuration of logical channels and the sequence of the at least one content in the second priority configuration of logical channels include: a MAC CE carrying a C-RNTI; a MAC CE carrying a BSR; a MAC CE carrying a PHR; and padding data.

That is, when the data on the DTCH, the data on the DCCH, the BSR, and the PHR need to be transmitted currently, it can be determined based on the second priority configuration of logical channels in this case to transmit neither the data on the DTCH nor the data on the DCCH. The BSR and the PHR can be transmitted in accordance with the sequence of the BSR and the PHR in the second priority configuration of logical channels described above.

It should also be understood that the first type of content is defined in the above as including at least one of the data on the DCCH and the data on the DTCH, but in practice, other data that is not allowed to be carried by the msg3 can be added as needed, though examples of such data are not exhaustively listed in this embodiment.

It can be seen that, by adopting the above solutions, the terminal device can be controlled to carry no first type of content in the msg3 when the terminal device performs the first type of handover. In this way, it is possible to reduce uplink data transmitted by the terminal device to the source network device and/or the target network device, thereby reducing additional operations due to reordering and data forwarding on the network side.

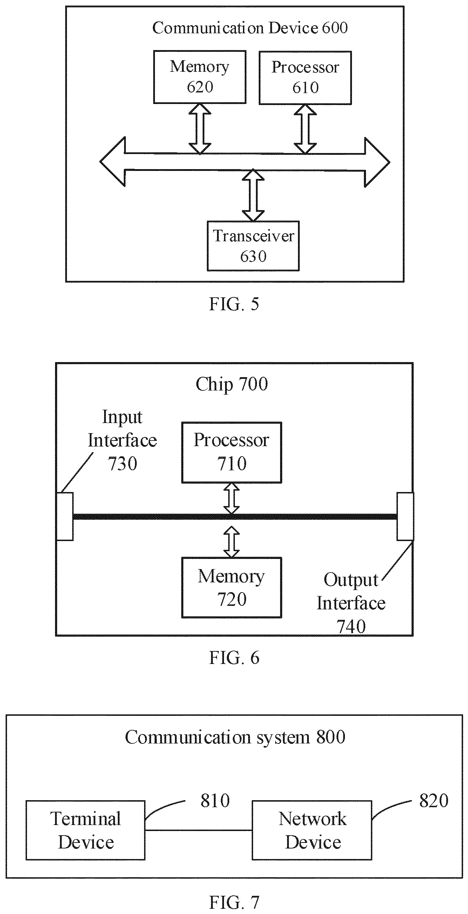

FIG. 5 is a schematic diagram showing a structure of a communication device 600 according to an embodiment of the present disclosure. The communication device according to this embodiment may specifically be the network device or the terminal device in the above embodiments. The communication device 600 illustrated in FIG. 5 includes a processor 610. The processor 610 is configured to invoke and run a computer program from a memory to perform the method according to any of the embodiments of the present disclosure.

In at least one embodiment, as illustrated in FIG. 5, the communication device 600 may further include a memory 620. The processor 610 may invoke and run a computer program from the memory 620 to perform the method according to any of the embodiments of the present disclosure.

Here, the memory 620 may be a separate component independent of the processor 610, or may be integrated in the processor 610.

In at least one embodiment, as illustrated in FIG. 5, the communication device 600 may further include a transceiver 630. The processor 610 may control the transceiver 630 to communicate with other devices, specifically, to transmit information or data to other devices, or receive information or data transmitted by other devices.

Here, the transceiver 630 may include a transmitter and a receiver. The transceiver 630 may further include one or more antennas.

In at least one embodiment, the communication device 600 may specifically be a network device according to an embodiment of the present disclosure. The communication device 600 may execute corresponding processes implemented by the network device in the method according to any of the embodiments of the present disclosure. For brevity, details thereof will be omitted herein.

In at least one embodiment, the communication device 600 may specifically be the terminal device or the network device according to any of the embodiments of the present disclosure. The communication device 600 may perform corresponding processes implemented by the mobile terminal/terminal device in the method according to any of the embodiments of the present disclosure. For brevity, details thereof will be omitted herein.

FIG. 6 is a schematic diagram showing a structure of a chip according to an embodiment of the present disclosure. A chip 700 illustrated in FIG. 6 includes a processor 710. The processor 710 can invoke and run a computer program from the memory to perform the method according to any of the embodiments of the present disclosure.

In at least one embodiment, as illustrated in FIG. 6, the chip 700 may further include a memory 720. The processor 710 may invoke and run a computer program from the memory 720 to perform the method according to any of the embodiments of the present disclosure.

Here, the memory 720 may be a separate component independent of the processor 710, or may be integrated in the processor 710.

In at least one embodiment, the chip 700 may further include an input interface 730. The processor 710 can control the input interface 730 to communicate with other devices or chips, specifically, to obtain information or data transmitted by other devices or chips.

In at least one embodiment, the chip 700 may further include an output interface 740. The processor 710 can control the output interface 740 to communicate with other devices or chips, specifically, to output information or data to other devices or chips.

In at least one embodiment, the chip can be applied to the network device according to any of the embodiments of the present disclosure. In addition, the chip can perform corresponding processes implemented by the terminal device in the method according to any of the embodiments of the present disclosure. For brevity, details thereof will be omitted herein.

It should be understood that the chip mentioned in the embodiments of the present disclosure may also be referred to as a system-level chip, a system-chip, a chip system, or a system-on-chip.

It is to be noted that the processor in the embodiment of the present disclosure may be an integrated circuit chip with signal processing capability. In an implementation, the operations of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, operations, and logical block diagrams disclosed in the embodiments of the present disclosure can be implemented or performed. The general purpose processor may be a microprocessor or any conventional processor. The operations of the methods disclosed in the embodiments of the present disclosure may be directly embodied as being performed and completed by a hardware decoding processor, or by a combination of hardware and software modules in the decoding processor. The software modules can be located in a well-known storage medium in the related art, such as random access memory, flash memory, read-only memory, programmable read-only memory, electrically erasable programmable memory, or register. The storage medium can be located in the memory, and the processor can read information from the memory and perform the operations of the above methods in combination with its hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. By way of illustration, rather than limitation, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but is not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but is not limited to, these and any other suitable types of memories.

FIG. 7 is a schematic block diagram showing a communication system 800 according to an embodiment of the present disclosure. As illustrated in FIG. 7, the communication system 800 includes a terminal device 810 and a network device 820.

The terminal device 810 may be configured to perform corresponding functions implemented by the UE in the above method, and the network device 820 may be configured to perform corresponding functions implemented by the network device in the above method. For brevity, details thereof will be omitted here.

An embodiment of the present disclosure also provides a computer-readable storage medium for storing a computer program.

In at least one embodiment, the computer-readable storage medium can be applied to the network device or the terminal device in the embodiment of the present disclosure, and the computer program can cause a computer to perform corresponding procedures implemented by the network device in the method according to any of the embodiments of the present disclosure. Details thereof will be omitted here for simplicity.

An embodiment of the present disclosure also provides a computer program product including computer program instructions.

In at least one embodiment, the computer program product can be applied to the network device or the terminal device in the embodiment of the present disclosure, and the computer program instructions can cause a computer to perform corresponding procedures implemented by the network device in the method according to any of the embodiments of the present disclosure. Details thereof will be omitted here for simplicity.

An embodiment of the present disclosure also provides a computer program.

In at least one embodiment, the computer program can be applied to the network device or the terminal device in the embodiment of the present disclosure. The computer program, when executed on a computer, can cause the computer to perform corresponding procedures implemented by the network device in the method according to any of the embodiments of the present disclosure. Details thereof will be omitted here for simplicity.

It can be appreciated by those skilled in the art that units and algorithm operations in the examples described in connection with the embodiments disclosed herein can be implemented in electronic hardware or any combination of computer software and electronic hardware. Whether these functions are executed by hardware or software depends on specific applications and design constraints of the technical solutions. Those skilled in the art may use different methods for each specific application to implement the described functions, and such implementation is to be encompassed by the scope of this disclosure.

Those skilled in the art can clearly understand that, for the sake of the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, the technical solutions according to the present disclosure essentially or the part thereof that contributes to the prior art or part of the technical solutions can be embodied in the form of a software product. The computer software product may be stored in a storage medium and contain instructions to enable a computer device, such as a personal computer, a server, or a network device, etc., to perform all or part of the operations of the method described in each of the embodiments of the present disclosure. The storage medium may include various mediums capable of storing program codes, such as a Universal Serial Bus flash drive, a mobile hard disk, a ROM, a RAM, a magnetic disk, or an optical disc.

While the specific embodiments of the present disclosure have been described above, the protection scope of the present disclosure is not limited to these embodiments. Various variants and alternatives can be easily conceived by any of those skilled in the art without departing from the technical scope of the present disclosure. Therefore, these variants and alternatives are to be encompassed by the protection scope of present disclosure as defined by the claims as attached.

## Claims

1. A method for processing information, applied in a terminal device, comprising:
transmitting, by the terminal device, a msg3 without carrying a first type of content, during a process of performing a first type of handover by the terminal device,
wherein the first type of content comprises data transmitted on a first type of channel.

2. The method according to claim 1, wherein the first type of channel comprises at least one of a Dedicated Control Channel (DCCH) and a Dedicated Traffic Channel (DTCH).

3. The method according to claim 2, further comprising:
determining, based on a first priority configuration of logical channels, a second type of content carried by the terminal device in the msg3 transmitted during the process of performing the first type of handover.

4. The method according to claim 3, wherein the first priority configuration of logical channels comprises at least one content capable of being carried by the terminal device during the first type of handover, and a sequence of the at least one content in the first priority configuration of logical channels is used as a priority sequence for packaging the at least one content during transmission,
wherein the at least one content in the first priority configuration of logical channels and the sequence of the at least one content in the first priority configuration of logical channels comprise:
a Media Access Control (MAC) Control Element (CE) carrying a Cell-Radio Network Temporary Identifier (C-RNTI), or data on an UpLink (UL)-Common Control Channel (CCCH);
a MAC CE carrying a Data volume and Power headroom Report (DPR);
a MAC CE carrying Semi-Persistent Scheduling (SPS) confirmation;
a MAC CE carrying a Buffer Status Report (BSR), except a BSR containing padding data;
a MAC CE carrying a Power Headroom Report (PHR), an extended PHR, or a dual connectivity PHR;
a MAC CE carrying a sidelink BSR, except a sidelink BSR containing padding data;
data on a logical channel, except data on the UL-CCCH, an UL-DCCH and an UL-DTCH, transmitted by the msg3 during the first type of handover;
a MAC CE carrying a request for a recommended bit rate;
a MAC CE carrying a BSR containing padding data; and
a MAC CE carrying a sidelink BSR containing padding data.

5. The method according to claim 2, further comprising:
determining the first type of content not carried in the msg3, based on a predetermined rule,
wherein the predetermined rule comprises that the msg3 transmitted during the process of performing the first type of handover does not carry at least one of data transmitted on the DTCH and data transmitted on the DCCH.

6. The method according to claim 2, further comprising:
during the process of performing the first type of handover by the terminal device, determining a second type of content carried by the terminal device in the msg3, by using a second priority configuration of logical channels.

7. The method according to claim 6, wherein the second priority configuration of logical channels comprises at least one content capable of being carried by the terminal device during the first type of handover, and a sequence of the at least one content in the second priority configuration of logical channels is used as a priority sequence for packaging the at least one content during transmission;
wherein the at least one content in the second priority configuration of logical channels and the sequence of the at least one content in the second priority configuration of logical channels comprise:
a Media Access Control (MAC) Control Element (CE) carrying a Cell-Radio Network Temporary Identifier (C-RNTI);
a MAC CE carrying a Buffer Status Report (BSR);
a MAC CE carrying a Power Headroom Report (PHR);
data on the DCCH; and
padding data.

8. The method according to claim 6, wherein the second priority configuration of logical channels comprises at least one content capable of being carried by the terminal device during the first type of handover, and a sequence of the at least one content in the second priority configuration of logical channels is used as a priority sequence for packaging the at least one content during transmission;
wherein the at least one content in the second priority configuration of logical channels and the sequence of the at least one content in the second priority configuration of logical channels comprise:
a Media Access Control (MAC) Control Element (CE) carrying a Cell-Radio Network Temporary Identifier (C-RNTI);
a MAC CE carrying a Buffer Status Report (BSR);
a MAC CE carrying a Power Headroom Report (PHR); and
padding data.

9. The method according to any one of claims 1 to 8, wherein the first type of handover is a handover during which connections with a target network device and a source network device are maintained.

10. The method according to claim 9, wherein the first type of handover is enhanced Make-Before-Break (eMBB) handover or dual active protocol stack handover.

11. A terminal device, comprising:
a communication unit configured to transmit a msg3 without carrying a first type of content, during a process of performing a first type of handover,
wherein the first type of content comprises data transmitted on a first type of channel.

12. The terminal device according to claim 11, wherein the first type of channel comprises at least one of a Dedicated Control Channel (DCCH) and a Dedicated Traffic Channel (DTCH).

13. The terminal device according to claim 12, further comprising:
a processing unit configured to determine, based on a first priority configuration of logical channels, a second type of content carried in the msg3 transmitted during the process of performing the first type of handover.

14. The terminal device according to claim 13, wherein the first priority configuration of logical channels comprises at least one content capable of being carried by the terminal device during the first type of handover, and a sequence of the at least one content in the first priority configuration of logical channels is used as a priority sequence for packaging the at least one content during transmission,
wherein the at least one content in the first priority configuration of logical channels and the sequence of the at least one content in the first priority configuration of logical channels comprise:
a Media Access Control (MAC) Control Element (CE) carrying a Cell-Radio Network Temporary Identifier (C-RNTI), or data on an UpLink (UL)-Common Control Channel (CCCH);
a MAC CE carrying a Data volume and Power headroom Report (DPR);
a MAC CE carrying Semi-Persistent Scheduling (SPS) confirmation;
a MAC CE carrying a Buffer Status Report (BSR), except a BSR containing padding data;
a MAC CE carrying a Power Headroom Report (PHR), an extended PHR, or a dual connectivity PHR;
a MAC CE carrying a sidelink BSR, except a sidelink BSR containing padding data;
data on a logical channel, except data on the UL-CCCH, an UL-DCCH and an UL-DTCH, transmitted by the msg3 during the first type of handover;
a MAC CE carrying a request for a recommended bit rate;
a MAC CE carrying a BSR containing padding data; and
a MAC CE carrying a sidelink BSR containing padding data.

15. The terminal device according to claim 12, further comprising:
a processing unit configured to determine the first type of content not carried in the msg3, based on a predetermined rule,
wherein the predetermined rule comprises that the msg3 transmitted during the process of performing the first type of handover does not carry at least one of data transmitted on the DTCH and data transmitted on the DCCH.

16. The terminal device according to claim 12, further comprising:
a processing unit configured to, during the process of performing the first type of handover, determine a second type of content carried in the msg3, by using a second priority configuration of logical channels.

17. The terminal device according to claim 16, wherein the second priority configuration of logical channels comprises at least one content capable of being carried by the terminal device during the first type of handover, and a sequence of the at least one content in the second priority configuration of logical channels is used as a priority sequence for packaging the at least one content during transmission;
wherein the at least one content in the second priority configuration of logical channels and the sequence of the at least one content in the second priority configuration of logical channels comprise:
a Media Access Control (MAC) Control Element (CE) carrying a Cell-Radio Network Temporary Identifier (C-RNTI);
a MAC CE carrying a Buffer Status Report (BSR);
a MAC CE carrying a Power Headroom Report (PHR);
data on the DCCH; and
padding data.

18. The terminal device according to claim 16, wherein the second priority configuration of logical channels comprises at least one content capable of being carried by the terminal device during the first type of handover, and a sequence of the at least one content in the second priority configuration of logical channels is used as a priority sequence for packaging the at least one content during transmission;
wherein the at least one content in the second priority configuration of logical channels and the sequence of the at least one content in the second priority configuration of logical channels comprise:
a Media Access Control (MAC) Control Element (CE) carrying a Cell-Radio Network Temporary Identifier (C-RNTI);
a MAC CE carrying a Buffer Status Report (BSR);
a MAC CE carrying a Power Headroom Report (PHR); and
padding data.

19. The terminal device according to any one of claims 11 to 18, wherein the first type of handover is a handover during which connections with a target network device and a source network device are maintained.

20. The terminal device according to claim 19, wherein the first type of handover is enhanced Make-Before-Break (eMBB) handover or dual active protocol stack handover.

21. A terminal device, comprising a processor, and a memory for storing a computer program executable on the processor,
wherein the memory has a computer program stored thereon, and the processor is configured to invoke and run the computer program stored in the memory to perform operations of the method according to any one of claims 1 to 10.

22. A chip, comprising a processor configured to invoke and run a computer program from a memory, thereby causing an apparatus provided with the chip to perform the method according to any one of claims 1 to 10.

23. A computer-readable storage medium, having a computer program stored thereon, wherein the computer program causes a computer to perform operations of the method according to any one of claims 1 to 10.

24. A computer program product, comprising computer program instructions, wherein the computer program instructions cause a computer to perform the method according to any one of claims 1 to 10.

25. A computer program, causing a computer to perform the method according to any one of claims 1 to 10.
